# EUROPÄISCHE PATENTSCHRIFT

(11) **EP 4 249 092 B1**
(45) Veröffentlichungstag und Bekanntmachung des Hinweises auf die Patenterteilung: **29.01.2025**
(21) Anmeldenummer: 22163804.2
(22) Anmeldetag: 23.03.2022
(51) Int. Cl.: A63F 7/06, A63F 7/36, F16C 31/02, F16C 35/02, F16C 33/04

(54) **LAGEREINHEIT**
BEARING UNIT
UNITÉ DE PALIER

(43) Veröffentlichungstag der Anmeldung: 27.09.2023
(73) Patentinhaber: Bangratz, René, 74076 Heilbronn (DE)
(72) Erfinder: Bangratz, René, 74076 Heilbronn (DE); Schlaup, Eduard, 66606 Sankt Wendel (DE)
(74) Vertreter: Wimmer, Stephan

(56) Entgegenhaltungen:
- DE-A1- 102016 012 934
- DE-A1- 102020 002 655
- DE-A1- 102022 001 011
- US-A- 4 382 598
- US-B1- 9 962 604

## Beschreibung

Die Erfindung betrifft eine Lagereinheit.

### Stand der Technik

Tischfußball ist eine mit einem Spielgerät (Tischfußballtisch) ausgeübte Ballsportart und ein dem Fußball nachempfundenes Geschicklichkeitsspiel. Die Ausübung wird auch als Tischkicker-Spielen oder einfach Kickern bezeichnet und das Spielgerät als Kickertisch.

Ziel ist es, mit an dreh- und bewegbaren Griffstangen oder Spielreihen über einer rechteckigen Spielfläche angebrachten Spielfiguren den Spielball ins gegnerische Tor zu befördern. Ein Spiel geht meist bis zu einer vorgegebenen Toranzahl, im organisierten Spielbetrieb wird auch über mehrere Gewinnsätze ("Best-of-Three" oder "Best-of-Five") gespielt.

Das Spielgerät ist üblicherweise mit je vier Spielreihen an den beiden Längsseiten der Spielfläche ausgestattet, an denen für beide Spielseiten jeweils insgesamt elf Spielfiguren angebracht sind: Torwartstange mit einer Figur, Verteidigerreihe mit 2 Figuren, Mittelfeldreihe mit 5 Figuren und Stürmerreihe mit 3 Figuren. Eine der wichtigsten Disziplinen ist das Doppel, bei dem je 2 Personen gemeinsam in einem Team spielen. Ein Team besteht dabei aus einem Verteidiger, der die Torwartstange und die Verteidigerreihe bedient, und einem Stürmer, der die Mittelfeldreihe und die Stürmerreihe bedient.

Durch das Bedienen der Stangen kann der Ball kontrolliert gespielt werden. Dabei gibt es verschiedene defensiven Techniken, wie Blocken und Halten, und offensive Techniken, wie Passen und Schießen. Das Erlernen erfordert ein Maß an Feinmotorik, Hand-Augen-Koordination und Reaktion. Im Sportbetrieb kommen vermehrt taktische Elemente und Strategien hinzu.

Tischfußballtische unterscheiden sich unter anderem durch die Art der Stangen, das Material und die Form der Puppen (Spielfiguren), die Eigenschaften der Spieloberfläche und durch die Beschaffenheit der Bälle. Abhängig von der Art des Tisches kommen unterschiedliche Techniken zum Einsatz. Weit verbreitete Modelle gibt es meist zusätzlich in einer Version mit Münzgerät, welche dann in Kneipen und anderen öffentlich zugänglichen Orten aufgestellt wird und so zu einer hohen Verbreitung führt. Einige Tische haben Glasplatten, um ein Hineingreifen sowie das unabsichtliche Herausschießen von Bällen zu verhindern.

Bei solchen Tischfußballtischen treten aufgrund der sperrig herausragenden Spielstangen Transportprobleme auf. Um das Gerät vor Transportschäden zu schützen, sind Schutzhauben bekannt, die von oben über das Gerät gestülpt werden. Damit verbunden ist ein vergrößerter Raumbedarf, der eine rationelle Nutzung des Transportmittels unmöglich macht. Ein anderer bekannter Lösungsweg besteht in einer bausatzweisen Lieferung. Dieser Weg ist jedoch nur für den Hersteller möglich, der das Transportproblem zu einem Bastelproblem für den Aufsteller werden lässt.

Die DE 30 46 466 A1 offenbart ein "Tisch-Spielgerät mit in sich gegenüberstehenden Seitenwänden gelagerten Spielstangen". Die Offenbarung betrifft ein Tisch-Spielgerät, insbesondere Tisch-Fußballgerät mit in sich gegenüberstehenden Seitenwänden axial verschiebbar gelagerten Spielstangen, mit denen Stoßkörper, insbesondere Fußballpuppen in einer Spielwanne bewegt werden. Dem offenbarten Gerät soll mit konstruktiven Mitteln transport- und aufstellfreundliche Eigenschaften verliehen werden, indem die Spielstange zerlegbar ausgebildet ist.

Die US 4 382 598 A offenbart ein "Stangenlager für Tischfussball oder Fussball Spielstruktur". Es wird eine Lagerstruktur für eine Stange offenbart, die sowohl eine Rotations- als auch eine Axialbewegung der Stange in Verbindung mit ihrer Längsbiegung ermöglicht. Zwei halbzylindrische Teile sind entlang einer axialen Trennlinie zusammensetzbar, um einen Ring aus reibungsarmem Material zu umschließen und eine erste zylindrische Lagerhälfte zu bilden, während eine zweite zylindrische Lagerhälfte ineinandergreifend ausgebildet ist, um die erste Hälfte aufzunehmen. Die zu lagernde Stange wird durch eine axiale Öffnung im Lager eingeführt.

Nachteilig an den bekannten Lagerungen für die Stangen ist, dass herkömmliche Lager es nicht erlauben, die Stange ohne Zerlegung mitsamt den daran montierten Figuren aus dem Tischfußballtisch zu entnehmen. Bei einem Transport des Tischfußballtischs müssen zunächst alle Figuren oder der Haltegriff abgeschraubt werden, um dann die Stangen aus dem Tischfußballtisch herauszuziehen. Oftmals ist der Haltegriff mit der Stange verklebt ausgebildet, so dass dann alle Figuren abgeschraubt werden müssen. Zudem ist es nicht möglich, eigene Stangen für das Spiel in einen Tisch mit einer einfachen Möglichkeit einzusetzen. Des Weiteren kann keine unterschiedlich hohe Position einer Öffnung in Bezug auf eine Spielfläche für die eingebrachten Stangen des Tischfußballtischs eingestellt werden.

Aufgabe der Erfindung ist es daher, eine Lagerung zur Verfügung zu stellen, die einen einfachen Tausch von Stangen an einem Tischfußballtisch ermöglicht.

### Offenbarung der Erfindung

Die Erfindung wird durch die Merkmale des Hauptanspruchs offenbart. Ausführungsformen und Weiterbildungen sind Gegenstand der sich an den Hauptanspruch anschließenden weiteren Ansprüche.

Es wird eine Lagereinheit mit einer Lagerschale offenbart, wobei die Lagerschale ein zweiteiliges Innenlager aufweist. Dieses zweiteilige Innenlager wird in die Lagerschale mit einer geeigneten Aussparung in diese eingeschoben. Das zweiteilige Innenlager weist unterschiedliche Höhen auf und dadurch unterschiedliche Möglichkeiten des Einsetzens von Stangen für einen Tischfußballtisch ermöglichen. Das zweiteilige Innenlager weist einen Einsteckbereich auf, der eine Ausbildung aufweist, die den Aussparungen der Lagerschale angepasst ist, so dass jede Ausführungsform des zweiteiligen Innenlagers in diese Lagerschale einschiebbar ist.

Durch die zweiteilige Ausbildung des Innenlagers kann zum Auswechseln einer Stange der nach dem Herausschieben aus der Lagerschale der Lagereinheit ein Abheben des oberen Teils erfolgen, die Stange herausgenommen werden und ein Transport bzw. Wiedereinsetzen einer anderen Stange oder beispielsweise ein Auswechseln der Figuren der Stange erfolgen.

Das zweiteilige Innenlager weist unterschiedlich hohe Ober- und Unterteile auf. Die beiden Teile des Innenlagers können zum Zusammenbau ineinander geclipst werden. Dazu weist ein Teil der Lagerschale zwei Laschen auf, die in jeweilige Aufnahmefelder des anderen Teils eingedrückt werden können. Das Auseinandernehmen erfolgt durch eine Lösung der beiden Teile durch Auseinanderziehen. Das zweiteilige Innenlager wird zum Einsetzen in die Lagerschale eingeschoben bzw. eingeclipst und zur Entnahme wieder herausgedrückt.

Im Bereich der Trennfläche des zweiteiligen Innenlagers ist eine kreisrunde Öffnung für eingebrachte Stangen des Tischfußballtischs ausgebildet. Durch die Möglichkeit, unterschiedlich hohe Ober- und Unterteile in unterschiedlichen Richtungen oben/unten in die Lagerschale einzusetzen, kann eine unterschiedlich hohe Position der kreisrunden Öffnung für die Stangen erfolgen und ermöglicht so eine Flexibilität der Lagerung der Stangen. Es ist ein Einsetzen verschiedener Figuren mit unterschiedlichen Größen bzw. Längen möglich. Ebenso kann der Abstand zur Spielebene zu den Figuren je nach dem spielerischen Können variiert werden.

In die kreisrunde Öffnung für die einzusetzende Stange kann ein Lagerring, insbesondere ein Teflonring, eingesetzt sein. Dieser Lager- bzw. Teflonring ist auswechselbar und ermöglicht unterschiedliche Weiten der innenliegenden Öffnung des zweiteiligen Innenlagers, so dass verschiedenartig ausgebildete Stangen eingesetzt werden können. Damit können in die Lagerschale mit dem erfindungsgemäßen zweiteiligen Innenlager unterschiedlichste Stangen eingesetzt werden.

Die erfindungsgemäße Lagereinheit mit der Lagerschale hat somit den Vorteil, dass jede beliebige Stange einsetzbar und in ihrer Positionierung flexibel lagerbar ist.

Weitere Vorteile und vorteilhafte Ausgestaltungen der Erfindung sind der nachfolgenden Figurenbeschreibung, den Zeichnungen und den Ansprüchen entnehmbar.

Nachfolgend wird ein Ausführungsbeispiel der erfindungsgemäßen Lösung anhand der beigefügten schematischen Zeichnungen näher erläutert. Es zeigt:
- Fig. 1a): zeigt eine isometrische Ansicht eines Ausschnitts eines Tischfussballtischs mit einer Lagerschale, wobei die Einzelteile in einer Explosionsdarstellung gezeigt sind,
- Fig. 1b): stellt eine Detailzeichnung aus Fig. 1a) in einer Explosionsansicht dar,
- Fig. 1c): zeigt eine weitere Detailzeichnung der Lagerschale in einer isometrischen Ansicht,
- Fig. 2: zeigt ein gegenüber einem Tischfußballtisch aus Fig. 1a) an dessen Außenseite positioniertes Rückteil einer Lagerschale in einer isometrischen Ansicht,
- Fig. 3: stellt ein gegenüber dem Tischfußballtisch an dessen Innenseite positioniertes Vorderteil der Lagerschale in einer isometrischen Ansicht dar,
- Fig. 4: zeigt ein Oberteil eines Innenlagers in einer isometrischen Ansicht,
- Fig. 5: stellt ein Unterteil eines Lagerrings in isometrischer Ansicht dar,
- Fig. 6: zeigt ein Unterteil des Innenlagers der Lagerschale in isometrischer Ansicht,
- Fig. 7a): zeigt eine Vorderansicht der Lagerschale mit einem Innenlager und
- Fig. 7b): zeigt die Lagerschale mit einem zu Fig. 7a) in der Vertikalrichtung umgedrehten Innenlager.

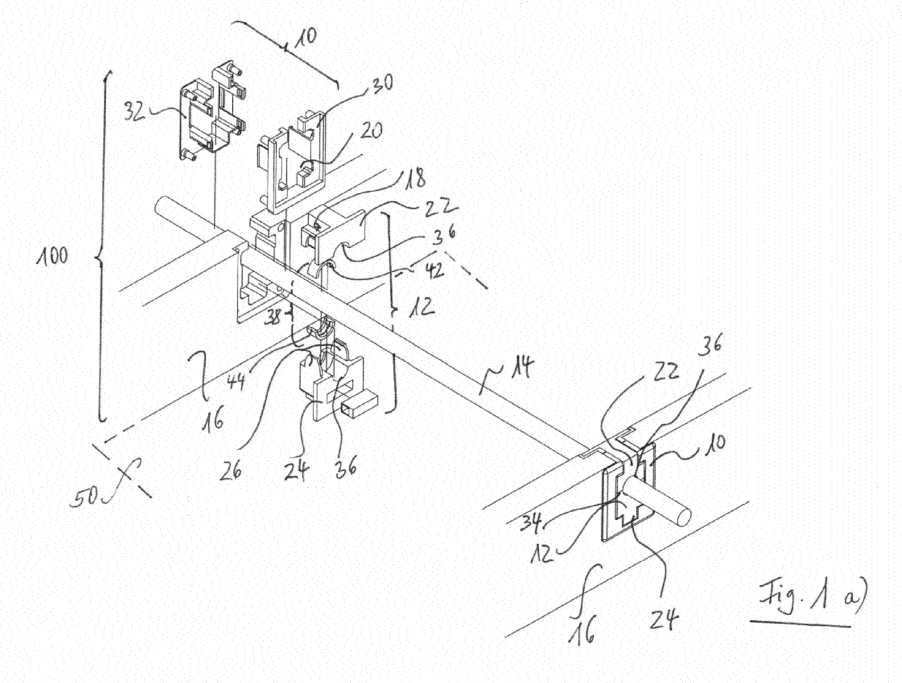

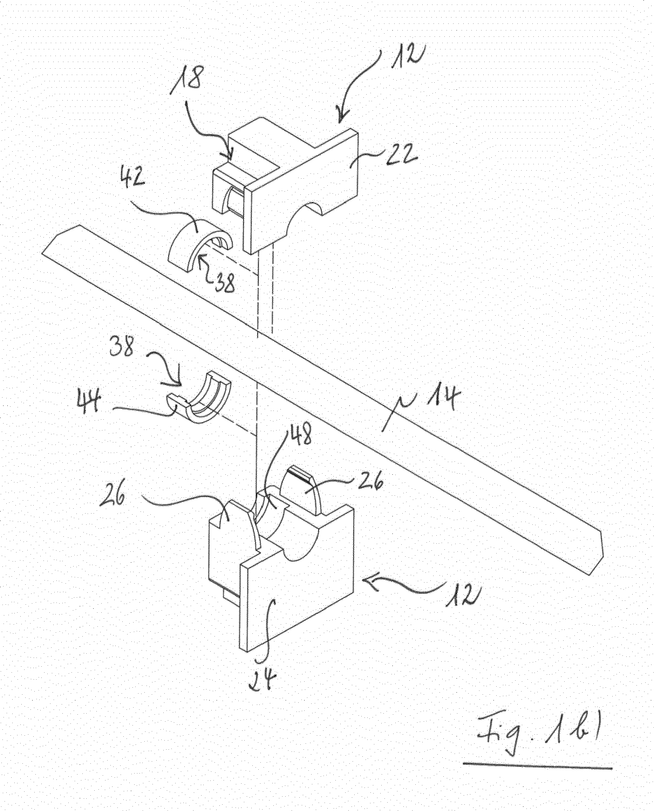

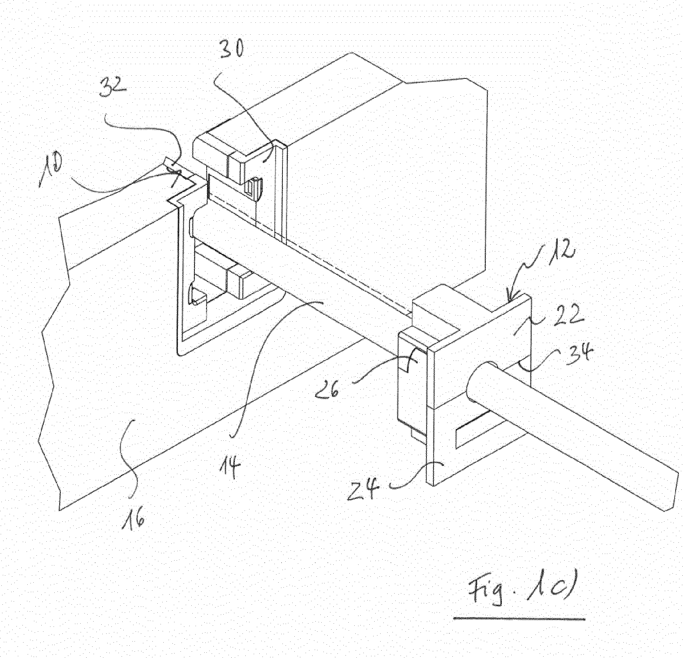

In Fig. 1) ist eine Lagereinheit 100 mit einer Lagerschale 10 offenbart, wobei die Lagerschale die ein zweiteiliges Innenlager 12 aufweist. Dieses zweiteilige Innenlager 12 wird in die Lagerschale 10 mit einer geeigneten Aussparung in diese eingeschoben. Die Lagerschale 10 kann ein- oder mehrteilig ausgebildet sein. Das zweiteilige Innenlager 12 weist unterschiedliche Höhen auf und dadurch unterschiedliche Möglichkeiten des Einsetzens von Stangen 14 für einen Tischfußballtisch 16 ermöglichen. Das zweiteilige Innenlager 12 weist einen Einsteckbereich 18 auf, der eine Ausbildung aufweist, die den Aussparungen 20 der Lagerschale 10 angepasst ist, so dass jede Ausführungsform des zweiteiligen Innenlagers 12 in diese Lagerschale 10 einschiebbar ist.

Das zweiteilige Innenlager 12 weist unterschiedlich hohe Ober- 22 und Unterteile 24 auf. Die beiden Teile 22, 24 des Innenlagers 12 können zum Zusammenbau ineinander geclipst werden. Dazu weist das Unterteil 24 des Innenlagers 12 zwei Laschen 26 auf, die in jeweilige Aufnahmefelder 28 des Oberteils 22 eingedrückt werden können. Das Auseinandernehmen erfolgt durch eine Lösung der beiden Teile, dem Ober- 22 und dem Unterteil 24, durch Auseinanderziehen bzw. Abheben. Das zweiteilige Innenlager 12 wird zum Einsetzen in die Lagerschale 10 eingeschoben bzw. eingeclipst und zur Entnahme wieder herausgedrückt. Die Lagerschale 10 kann ein Vorderteil 30 und ein Rückteil 32 aufweisen und zusammensteckbar ausgebildet sein.

Im Bereich einer Trennfläche 34 des zweiteiligen Innenlagers 12 ist eine kreisrunde Öffnung 36 für eingebrachte Stangen 14 des Tischfußballtischs 16 ausgebildet. Durch die Möglichkeit, unterschiedlich hohe Ober- 22 und Unterteile 24 in unterschiedlichen Richtungen oben/unten in die Lagerschale 10 einzusetzen, oder das gesamte Innenlager 12 gekippt um eine horizontale Achse verkehrt herum einzusetzen, kann eine unterschiedlich hohe Position der kreisrunden Öffnung 36 in Bezug auf eine Spielfläche 50 für die Stangen 14 erfolgen und ermöglicht so eine Flexibilität der Lagerung der Stangen 14. Dadurch kann die Stangenposition gewechselt werden, ohne dass eine zusätzliche Sicherung der Lage der Stangen 14 von oben her notwendig ist.

In die kreisrunde Öffnung 36 für die einzusetzende Stange 14 kann ein Lagerring 38, insbesondere ein Teflonring, der teilbar ausgebildet sein kann, in eine jeweilige Ausnehmung der kreisrunden Öffnung 36 eingesetzt sein. Dieser Lager- bzw. Teflonring ist auswechselbar und ermöglicht unterschiedliche Weiten der innenliegenden Öffnung 36 des zweiteiligen Innenlagers 12, so dass verschiedenartig ausgebildete Stangen 14 eingesetzt werden können. Damit können in die Lagerschale 10 mit dem erfindungsgemäßen zweiteiligen Innenlager 12 unterschiedlichste Stangen 14 eingesetzt werden. Eine Oberhälfte 42 des Lagerrings 38 ist im Oberteil 22, eine Unterhälfte 44 des Lagerrings 38 ist im Unterteil 24 des Innenlagers positioniert. Es ist eine Spielfläche 50 skizziert dargestellt.

Fig. 1b) stellt eine Detailzeichnung aus Fig. 1a) dar. Dargestellt ist die Stange 14 sowie das Innenlager 12 mit seinen beiden Teilen, dem Oberteil 22 und dem Unterteil 24. Des Weiteren ist der Lagerring 38 mit seinen beiden Hälften, der Oberhälfte 42 sowie der Unterhälfte 44, dargestellt. Das Oberteil 22 sowie das Unterteil 24 des Innenlagers 12 können mit den Laschen 26 zusammengesteckt werden und die Stange 14 aufnehmen.

Fig. 1c) zeigt die Wand des Tischfussballtischs 16 sowie das Vorderteil 30 und das Rückteil 32 der Lagerschale 10. Das Innenlager 12 ist in dieser Ansicht zusammengesteckt und kann entlang der gestrichelten Linie an der Stange 14 in die Lagerschale 10 eingeschoben werden.

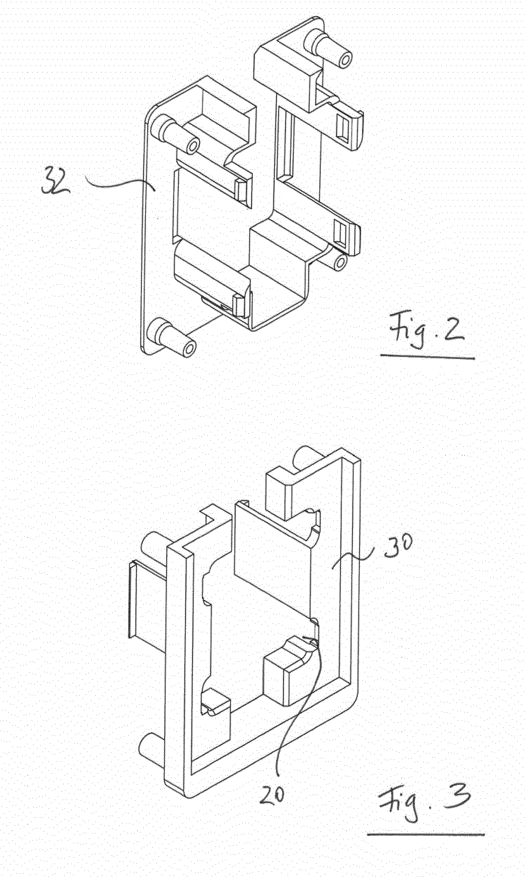

Fig. 2 zeigt ein Rückteil 32 der Lagerschale 10 aus Fig. 1a) mit Zapfen und Rastvorsprüngen.

Fig. 3 zeigt das zum Rückteil 32 aus Fig. 2 gehörende Vorderteil 30 der in Fig. 1a) bezeichneten Lagerschale 10. Das Rückteil 32 aus Fig. 2 sowie das Vorderteil 30 aus Fig. 3 werden durch Zusammendrücken und Einrasten der Zapfen und Rastvorsprünge und der jeweiligen Aufnahmen ineinandergesteckt und bilden so zusammen die Lagerschale 10. Dadurch wird eine Aussparung 20 gebildet, in die das Innenlager 12 aus Fig. 1 eingeschoben werden kann, das entsprechend ausgebildete Einsteckbereiche 18, vgl. Fig. 1, aufweist.

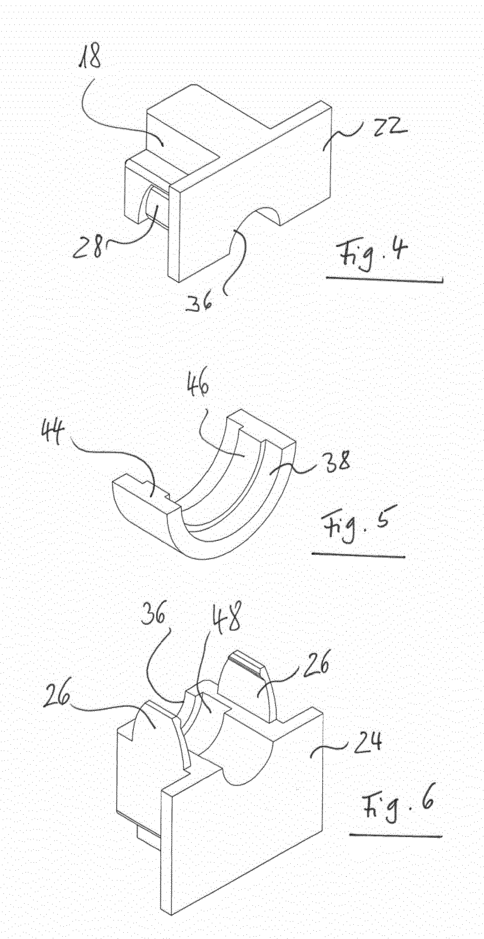

Fig. 4 zeigt ein Oberteil 22 des zweiteiligen Innenlagers 12 aus Fig. 1. Es sind Aufnahmefelder 28 ausgebildet.

Fig. 5 stellt eine Unterhälfte 44 eines Lagerrings 38 dar. Der Lagerring 38 weist einen Vorsprung 46 auf. Durch die Ausbildung des Vorsprungs 46 und die Auswechselbarkeit des Lagerrings 38 können ganz unterschiedliche Stangen 14 aus Fig. 1 mit unterschiedlichen Durchmessern eingesetzt werden. Der Lagerring (38) kann aus Polytetrafluorethylen (PTFE) ausgebildet sein und Dauergleiteigenschaften aufweisen.

Fig. 6 zeigt ein Unterteil 24 des zweiteiligen Innenlagers 12 aus Fig. 1. Das Unterteil 24 weist Laschen 26 auf, die in die Einsteckbereiche 18 des Oberteils 22 aus Fig. 4 eingeschoben werden können und dabei verrasten. Die Verrastung ist reversibel, da durch Lösen der Rastverbindung das Oberteil 22 vom Unterteil 24 abgenommen werden kann. In das Unterteil 24 ist die Unterhälfte 44 des Lagerrings 38 einsetzbar. Eine obere Hälfte der kreisrunden Öffnung 36 des Oberteils 22 aus Fig. 4 sowie eine untere Hälfte der kreisrunden Öffnung 36 des Unterteils 24 bilden zusammen die kreisrunde Öffnung 36, in die die Unterhälfte 44 des Lagerrings 38 aus Fig. 5 sowie die Oberhälfte 42 aus Fig. 1 durch die Verbindung des Oberteils 22 und des Unterteils 24 zusammengedrückt und verbunden werden und damit den Lagerring 38 ausbilden. Das Unterteil 24 des Innenlagers 12 weist eine Ausnehmung 48 auf, in die der Lagerring 38 bzw. dessen Unterhälfte 44 eingelegt wird.

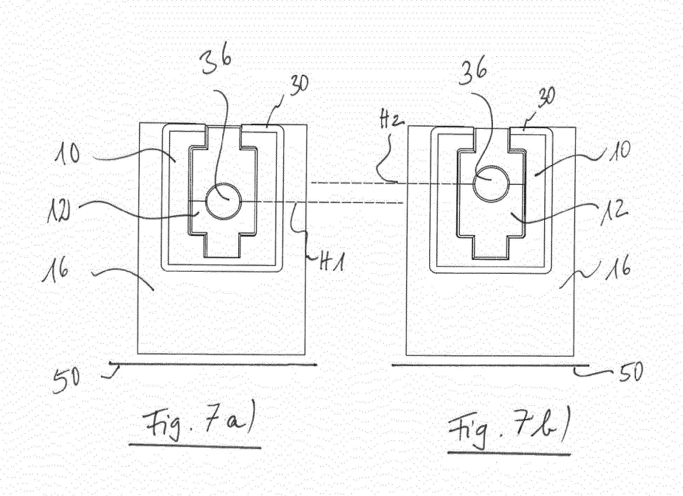

Fig. 7a) zeigt ein Innenlager 12 in zusammengestecktem und in die Lagerschale 10 eingeschobenen Zustand. Das Innenlager 12 ist so positioniert, dass die Öffnung 36 in einem unteren Bereich des Innenlagers 12 in einer Höhe H1 in Bezug auf die Spielfläche 50, vgl. auch Fig. 1a), ausgebildet ist.

Fig. 7b) zeigt das Innenlager 12 innerhalb der Lagerschale 10 im vertikal umgekehrt eingeschobenen Zustand, so dass die Öffnung 36 gegenüber der Öffnung 36 aus Fig. 7a) in einer höheren Position einer Höhe H2 in Bezug auf die Spielfläche 50, s. auch Fig. 1a), angeordnet ist.

Alle in der Beschreibung, den nachfolgenden Ansprüchen und den Zeichnungen dargestellten Merkmale können sowohl einzeln als auch in beliebiger Kombination miteinander erfindungswesentlich sein.

### Bezugszeichenliste

- 10: Lagerschale
- 12: Innenlager
- 14: Stange
- 16: Tischfußballtisch
- 18: Einsteckbereich
- 20: Aussparung
- 22: Oberteil
- 24: Unterteil
- 26: Lasche
- 28: Aufnahmefeld
- 30: Vorderteil
- 32: Rückteil
- 34: Trennfläche
- 36: Öffnung
- 38: Lagerring
- 42: Oberhälfte
- 44: Unterhälfte
- 46: Vorsprung
- 48: Ausnehmung
- 50: Spielfläche

- 100: Lagereinheit

- H1: tiefer gelegene Höhe in Bezug auf 50
- H2: höher gelegene Höhe in Bezug auf 50

## Patentansprüche

1. Lagereinheit (100) für einen Tischfußballtisch (16), wobei die Lagereinheit (100) eine Lagerschale (10) sowie ein Innenlager (12) aufweist, das zweiteilig ausgebildet ist und ein Oberteil (22) sowie ein Unterteil (24) aufweist,
**dadurch gekennzeichnet, dass**
eine Anordnung von Öffnungen (36) des Innenlagers (12) in unterschiedlichen Höhen (H1, H2) in Bezug auf eine Spielfläche (50) innerhalb der Lagerschale (10) erfolgt und bei der Ausbildung des Innenlagers (12) mit jeweils unterschiedlich hoch ausgebildetem Oberteil (22) sowie Unterteil (24) durch eine variable vertikale Anordnung des Innenlagers (12) in der Lagerschale (10) durch eine Drehung um 180° des Innenlagers (12) beim Einsetzen in die Lagerschale (10) eine variable Höhe der Öffnung (36) in Vertikalrichtung der Lagereinheit (100) wählbar ist.

2. Lagereinheit (100) nach Anspruch 1, **dadurch gekennzeichnet, dass** das Oberteil (22) des Innenlagers (12) Aufnahmefelder (28) und das Unterteil (24) des Innenlagers (12) Laschen (16) aufweist, wobei die Laschen (16) zur Verbindung in die Aufnahmefelder (28) reversibel eingerastet sind.

3. Lagereinheit (100) nach einem der vorhergehenden Ansprüche, **dadurch gekennzeichnet, dass** das Innenlager (12) einen Einsteckbereich (18) aufweist, der eine Ausbildung aufweist, die Aussparungen (20) der Lagerschale (10) angepasst ist, wobei die Lagerschale (10) in den Einsteckbereich (18) einschiebbar und wieder herausnehmbar ausgebildet ist.

4. Lagereinheit (100) nach einem der vorhergehenden Ansprüche, **dadurch gekennzeichnet, dass** das Oberteil (22) und das Unterteil (24) des Innenlagers (12) die gleiche Höhe oder unterschiedliche Höhen aufweisen.

5. Lagereinheit (100) nach einem der vorhergehenden Ansprüche, **dadurch gekennzeichnet, dass** im Bereich einer Trennfläche (34) des Innenlagers (12) zwischen dem Oberteil (22) und dem Unterteil (24) die Öffnung (36) ausgebildet ist, die dem Lagern einer Stange (14) dient.

6. Lagereinheit (100) nach Anspruch 5, **dadurch gekennzeichnet, dass** innerhalb der Öffnung (36) ein Lagerring (38) angeordnet ist.

7. Lagereinheit (100) nach einem der vorhergehenden Ansprüche, **dadurch gekennzeichnet, dass** der Lagerring (38) aus Polytetrafluorethylen (PTFE) ausgebildet ist.

8. Lagereinheit (100) nach Anspruch 7, **dadurch gekennzeichnet, dass** der Lagerring (38) Dauergleiteigenschaften aufweist.

9. Lagereinheit (100) nach einem der vorhergehenden Ansprüche, **dadurch gekennzeichnet, dass** der Lagerring (38) teilbar ausgebildet ist und eine Oberhälfte (42) sowie eine Unterhälfte (44) aufweist.

10. Lagereinheit (100) nach Anspruch 9, **dadurch gekennzeichnet, dass** der Lagerring (38) in eine jeweilige Ausnehmung (48) der kreisrunden Öffnung (36) eingesetzt ist.

11. Lagereinheit (100) nach einem der vorhergehenden Ansprüche 9 oder 10, **dadurch gekennzeichnet, dass** der Lagerring (38) ohne Demontage von einem Griff der Stange (14) und/oder einer an der Stange (14) angeordneten Figur auswechselbar ist.

12. Lagereinheit (100) nach einem der vorhergehenden Ansprüche 9 bis 11, **dadurch gekennzeichnet, dass** der Lagerring (38) durch die Ausbildung eines Vorsprungs (46) mit wählbaren Durchmessern unterschiedliche Weiten der innenliegenden Öffnung (36) des zweiteiligen Innenlagers (12) erzeugt, so dass verschiedenartig ausgebildete Stangen (14) mit unterschiedlichen Durchmessern einsetzbar sind.

## Claims

1. A bearing unit (100) for a football table (16), wherein the bearing unit (100) has a bearing shell (10) and an inner bearing (12), which is formed in two parts and has an upper part (22) and a lower part (24),
**characterised in that**
there is an arrangement of openings (36) of the inner bearing (12) inside the bearing shell (10) at various heights (H1, H2) in relation to a playing surface (50), and when the inner bearing (12) is configured with the upper part (22) and lower part (24) having different heights, a variable height of the opening (36) in the vertical direction of the bearing unit (100) can be selected through a variable vertical arrangement of the inner bearing (12) in the bearing shell (10) by rotation of the inner bearing (12) through 180° on insertion into the bearing shell (10).

2. The bearing unit (100) according to claim 1, **characterised in that** the upper part (22) of the inner bearing (12) has receiving sections (28) and the lower part (24) of the inner bearing (12) has tabs (16), wherein the tabs (16) are reversibly snapped into the receiving sections (28) for connection.

3. The bearing unit (100) according to one of the preceding claims, **characterised in that** the inner bearing (12) has an insertion region (18) which has a configuration that is matched to cutouts (20) in the bearing shell (10), wherein the bearing shell (10) is configured such that it can be pushed into the insertion region (18) and removed again.

4. The bearing unit (100) according to one of the preceding claims, **characterised in that** the upper part (22) and the lower part (24) of the inner bearing (12) have the same height or different heights.

5. The bearing unit (100) according to one of the preceding claims, **characterised in that** the opening (36), which serves to support a rod (14), is formed in the region of a separating surface (34) of the inner bearing (12) between the upper part (22) and the lower part (24).

6. The bearing unit (100) according to claim 5, **characterised in that** a bearing ring (38) is arranged inside the opening (36).

7. The bearing unit (100) according to one of the preceding claims, **characterised in that** the bearing ring (38) is formed from polytetrafluoroethylene (PTFE).

8. The bearing unit (100) according to claim 7, **characterised in that** the bearing ring (38) has durable sliding properties.

9. The bearing unit (100) according to one of the preceding claims, **characterised in that** the bearing ring (38) is configured to be separable and has an upper half (42) and a lower half (44).

10. The bearing unit (100) according to claim 9, **characterised in that** the bearing ring (38) is inserted into a corresponding recess (48) in the circular opening (36).

11. The bearing unit (100) according to one of the preceding claims 9 or 10, **characterised in that** the bearing ring (38) can be replaced without dismantling a handle of the rod (14) and/or a figure arranged on the rod (14).

12. The bearing unit (100) according to one of the preceding claims 9 to 11, **characterised in that** through the formation of a projection (46) having selectable diameters, the bearing ring (38) produces different widths of the internal opening (36) of the two-part inner bearing (12) so that variously configured rods (14) having differing diameters can be inserted.

## Revendications

1. Unité de palier (100) pour une table de football de table (16), l'unité de palier (100) présentant un coussinet (10) et un palier intérieur (12) qui est réalisé en deux parties et présente une partie supérieure (22) et une partie inférieure (24),
**caractérisée en ce**
**qu'**un agencement d'ouvertures (36) du palier intérieur (12) à différentes hauteurs (H1, H2) par rapport à une surface de jeu (50) a lieu à l'intérieur du coussinet (10) et, lors de la réalisation du palier intérieur (12) avec une partie supérieure (22) et une partie inférieure (24) réalisées de hauteurs différentes, une hauteur variable de l'ouverture (36) dans la direction verticale de l'unité de palier (100) peut être sélectionnée par un agencement vertical variable du palier intérieur (12) dans le coussinet (10) par une rotation de 180° du palier intérieur (12) lors de l'insertion dans le coussinet (10).

2. Unité de palier (100) selon la revendication 1, **caractérisée en ce que** la partie supérieure (22) du palier intérieur (12) présente des champs de réception (28) et la partie inférieure (24) du palier intérieur (12) présente des pattes (16), les pattes (16) étant enclenchées de manière réversible dans les champs de réception (28) pour la liaison.

3. Unité de palier (100) selon l'une quelconque des revendications précédentes, **caractérisée en ce que** le palier intérieur (12) présente une zone d'enfichage (18) qui présente une réalisation qui est adaptée à des évidements (20) du coussinet (10), le coussinet (10) étant réalisé de manière à pouvoir être enfilé dans la zone d'enfichage (18) et à pouvoir être retiré.

4. Unité de palier (100) selon l'une quelconque des revendications précédentes, **caractérisée en ce que** la partie supérieure (22) et la partie inférieure (24) du palier intérieur (12) présentent la même hauteur ou des hauteurs différentes.

5. Unité de palier (100) selon l'une quelconque des revendications précédentes, **caractérisée en ce que** l'ouverture (36) servant à loger une tige (14) est réalisée dans la zone d'une surface de séparation (34) du palier intérieur (12) entre la partie supérieure (22) et la partie inférieure (24).

6. Unité de palier (100) selon la revendication 5, **caractérisée en ce qu'**une bague de palier (38) est agencée à l'intérieur de l'ouverture (36).

7. Unité de palier (100) selon l'une quelconque des revendications précédentes, **caractérisée en ce que** la bague de palier (38) est réalisée en polytétrafluoroéthylène (PTFE).

8. Unité de palier (100) selon la revendication 7, **caractérisée en ce que** la bague de palier (38) présente des propriétés de glissement permanent.

9. Unité de palier (100) selon l'une quelconque des revendications précédentes, **caractérisée en ce que** la bague de palier (38) est réalisée sous forme divisible et présente une moitié supérieure (42) et une moitié inférieure (44).

10. Unité de palier (100) selon la revendication 9, **caractérisée en ce que** la bague de palier (38) est insérée dans un évidement respectif (48) de l'ouverture circulaire (36).

11. Unité de palier (100) selon l'une quelconque des revendications 9 ou 10 précédentes, **caractérisée en ce que** la bague de palier (38) est interchangeable sans démontage d'une poignée de la tige (14) et/ou d'une figurine agencée sur la tige (14).

12. Unité de palier (100) selon l'une quelconque des revendications 9 à 11 précédentes, **caractérisée en ce que** la bague de palier (38) génère différentes largeurs de l'ouverture intérieure (36) du palier intérieur (12) en deux parties par la réalisation d'une saillie (46) de diamètres sélectionnables, de telle sorte que des tiges (14) de réalisation différente avec des diamètres différents peuvent être insérées.
